# EUROPÄISCHE PATENTSCHRIFT

(11) **EP 0 559 078 B1**
(45) Veröffentlichungstag und Bekanntmachung des Hinweises auf die Patenterteilung: **10.01.1996**
(21) Anmeldenummer: 93102933.4
(22) Anmeldetag: 25.02.1993
(51) Int. Cl.: F16L 55/10

(54) **Kühlklammer zum Einfrieren von Rohrleitungen**
Cooling clamp for freezing pipes
Agrafe de refroidissement pour congélation des conduites

(30) Priorität: 03.03.1992 DE 4206580
(43) Veröffentlichungstag der Anmeldung: 08.09.1993
(73) Patentinhaber: ROTHENBERGER WERKZEUGE-MASCHINEN GMBH, D-65779 Kelkheim (DE)
(72) Erfinder: Velte, Karl-Heinz, W-6396 Weilrod 3 (DE)
(74) Vertreter: Zapfe, Hans, Dipl.-Ing.

(56) Entgegenhaltungen:
- EP-A- 0 316 588
- WO-A-89/01110
- DE-A- 3 903 009

## Beschreibung

Die Erfindung betrifft eine Kühlklammer zum Einfrieren von mediendurchströmten Rohrleitungen, insbesondere zum örtlichen Absperren von Wasserleitungen von Heizungssystemen durch Bilden von Eispfropfen, mit zwei Klammerteilen für das Verspannen der Kühlklammer gegen die Rohrleitung, von denen mindestens ein Klammerteil als Kühlbacke ausgebildet ist, die eine Ausnehmung für das Aufsetzen der Kühlklammer auf die einzufrierende Rohrleitung, einen Hohlraum für die Durchleitung eines Kältemittels sowie einen Anschluß für die Verbindung des Hohlraums mit einer Kühlmittelquelle aufweist, wobei in einem der Klammerteile ein Temperaturfühler angeordnet ist.

Bei einer derartigen Kühlklammer nach der DE-PS 39 03 009 ist in einer der Kühlbacken ein Temperaturfühler eingesetzt. Überlicherweise werden bei Anwendung zweier Kühlklammern auf beiden Seiten des zu öffnenden Rohrstrangs zwei Eispfropfen gebildet. Schwierig ist hierbei das Erkennen desjenigen Zeitpunkts, zu dem sich vollständige Eispfropfen ausreichender Belastbarkeit gebildet haben.

Als Faustregel gilt eine Zeitdauer von einer Minute pro Millimeter Durchmesser der einzufrierenden Rohrleitung. Diese Faustregel ist aber nicht sehr zuverlässig, da die Einfrierzeit von der Ausgangstemperatur und vom Wärmekontakt zwischen Kühlbacke und Rohrleitung abhängt, aber auch von etwaigen Mikro-Konvektionen in der Rohrleitung, und diese sind wiederum abhängig von der Raumlage des betreffenden Rohrleitungsabschnitts. Wird der Eispfopfen unvermutet wieder aufgetaut, dann ist das Leck schwer zu stopfen.

Bei der bekannten Kühlklammer wird ohne besondere Maßnahmen zumindest vorrangig die Temperatur der Kühlbacke erfaßt, in der der Temperaturfühler wärmeleitend angeordnet ist. Die Temperaturabsekung der Kühlbacke eilt aber der Temperaturabsenkung der Rohrleitung voraus, so daß die Gefahr besteht, daß das Signal zum Öffnen des Rohrstranges zu früh gegeben wird.

Man hat sich daher in der Praxis so beholfen, daß man neben der Kühlklammer einen Wärmefühler an der Rohrleitung angebracht hat in der Erwartung, daß die dort gemessene Temperatur eine zuverlässinge Beurteilung des Verschlußzustandes der Rohrleitung erlauben könnte. Auch diese Maßnahme hat sich aus ähnlichen Gründen nicht als sehr zuverlässig erwiesen.

Der Erfindung liegt daher die Aufgabe zugrunden, die Gebrauchseigenschaften der Kühl klammer dahingehend zu verbessern, daß der Einfrierzustand der Rohrleitung zuverlässiger erkennbar ist.

Die Lösung der gestellten Aufgabe erfolgt bei der eingangs angegebenen Kühlklammer erfindungsgemäß dadurch, daß der Temperaturfühler gegenüber der Kühlbacke thermisch isoliert angeordnet und in Wärmekontakt mit der Rohrleitung bringbar ist.

Ein solcherart angeordneter Temperaturfühler ist immer zur Hand, und er erlaubt auch eine sehr viel genauere Bestimmung der Grenztemperatur, bei der ein zuverlässiger Verschluß der Rohrleitung durch einen Eispfropfen gebildet worden ist. Streuungen durch den Einfluß der Anfangstemperatur und etwaiger Mikro- Konvektionen sind dabei äußerst weitgehend ausgschlossen.

Es können z.B. beide Klammerteile als Kühlbacken ausgebildet sein, wobei der Temperaturfühler alsdann in einer der Kühlbacken gegenüber dieser thermisch isoliert eingesetzt ist und den Wärmekontakt nur mit der Rohrleitung hat. Aber auch eine asymmetrische Ausbildung der Kühlklammer ist denkbar, bei der nur eines der Klammerteile als Kühlbacke ausgebildet ist und der Temperaturfühler in den anderen Klammerteil eingesetzt ist.

Besonders vorteilhafte Wirkungen werden dann erzielt wenn:
- eines der Klammerteile mindestens teilweise aus einem schlecht wärmeleitenden Werkstoff ausgebildet ist und wenn der Temperaturfühler in den schlecht wärmeleitenden Werkstoff eingesetzt ist,
- das betreffenden Klammerteil mindestens im Bereich des Temperaturfühlers aus einem schlecht wärmeleitenden Kunststoff besteht,
- das Klammerteil mit dem Temperaturfühler aus einem Kunststoff besteht,
- der Temperaturfühler wärmeleitend in einen Leitkörper eingesetzt ist, der seinerseits thermisch isoliert in dem betreffenden Klammerteil angeordnet ist, aus diesem herausragt und in unmittelbaren Kontakt mit der Rohrleitung bringbar angeordnet ist.
- der Leitkörper pilzförmig mit Hut und Stiel ausgebildet ist, wenn der Hut aus der Oberfläche des betreffenden Klammerteils herausragt, und wenn sich im Stiel eine Bohrung befindet, in die der Temperaturfühler eingesetzt ist,
- der Hohlraum zwischen einer Außenschale und einer Innenschale gebildet ist und wenn die Innenschale mit in den Hohlraum ragenden Kühlvorsprüngen versehen ist, und wenn
- die Kühlvorsprünge als radiale Kühlrippen ausgebildet sind.

Insbesondere die beiden zuletzt genannten Konstruktionsvorschriften verbessern den Wärmabfluß aus der Rohrleitung merklich und verkürzen die Einfrierzeit, und zwar auch dann, wenn in das Zangenmaul sogenannte Distanzschalen oder Reduziereinsätze eingesetzt werden, durch die eine Kühlklammer mit großem Nenndurchmesser an unterschiedliche, kleinere Rohrleitungsdurchmesser angepaßt wird.

Ein Ausführungsbeispiel des Erfindungsgegenstandes wird nachfolgend anhand der perspektivischen Darstelllungen in den Figuren 1 bis 4 näher erläutert, über den Stand der Technik und die Auswirkungen von Varianten des Erfindungsgegenstandes gibt die Tabelle in Figur 5 Auskunft.

Es zeigen:
- Figur 1: eine vollständige Kühlklammer, aufgesetzt auf eine Rohrleitung,
- Figur 2: den Klammerteil mit dem Temperaturfühler in Einzeldarstellung,
- Figur 3: den Klammerteil mit der Kühlbacke in Einzeldarstellung,
- Figur 4: den Klammerteil nach Figur 3 in teilweise aufgeschnittenem Zustand, und
- Figur 5: eine Tabelle mit Vergleichsversuchen und Versuchen zur Erfindung.

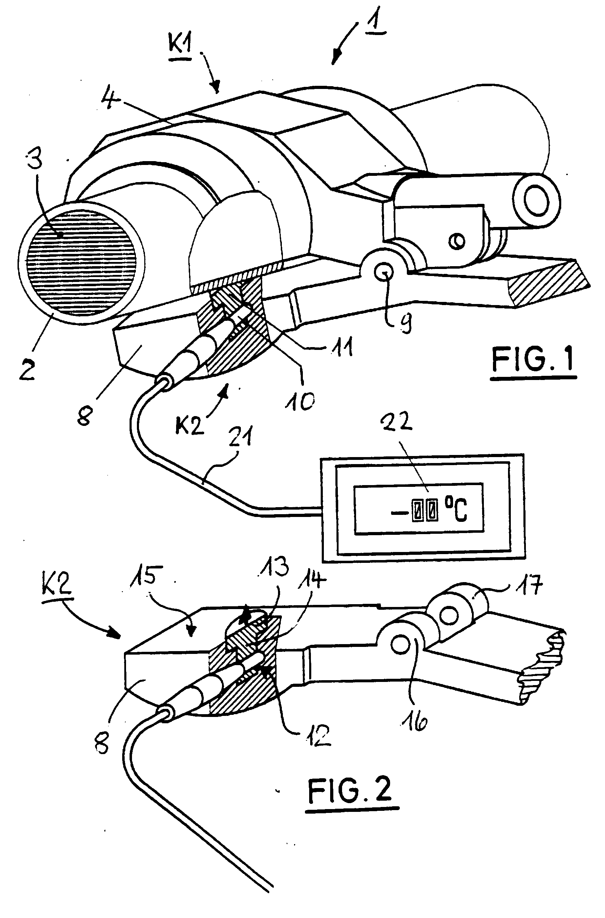

In Figur 1 ist eine Kühlklammer 1 dargestellt, die auf eine Rohrleitung 2 eines Heizungssystems aufgeklemmt ist. In dieser Leitung wurde bereits ein Eispfropfen 3 gebildet. Zur Kühlklammer gehört ein erstes, als Kühlbacke 4 ausgebildetes Klammerteil K1 aus Metall, z.B. aus Kupfer, das eine halbzylindrische Ausnehmung 5 für das Aufsetzen der Kühlklammer auf die einzufrierende Rohrleitung, einen Hohlraum 6 für die Durchleitung eines Kältemittels sowie einen Anschluß 7 für die Verbindung des Hohlraums 6 mit einer nicht gezeigten Kühlmittelquelle aufweist, die als Kälteaggregat mit einem geschlossenen Kältemittelkreislauf ausgebildet sein kann (siehe z.B. die DE-PS 39 03 009).

Ein zweites Klammerteil K2 ist als eine der Ausnehmung 5 gegenüberliegenden Klemmbacke 8 für das Verspannen der Kühlbacke gegen die Rohrleitung 2 ausgebildet und besteht aus einem wärmeisolierenden Kunststoff. Die beiden Klammerteile sind über angeformte Lagerböcke 16 und 17 und einen Gelenkzapfen 9 miteinander verbunden und stehen unter der Wirkung einer nicht gezeigten Bügelfeder nach Art einer Wäscheklammer. Der Lagerbock der Kühlbacke 4 ist verdeckt.

In der Klemmbacke 8 ist ein mit der Rohrleitung 2 in Wärmekontakt zu bringender Temperaturfühler 10 angeordnet. Der Temperaturfühler 10 ist dadurch gegenüber der Klemmbacke 8 thermisch isoliert, daß die Klemmbacke 8 aus einem schlecht wärmeleitenden, aber auch bei tiefen Temperaturen hochfesten Kunststoff besteht.

In die Klemmbacke 8 ist ein mit der Rohrleitung 2 in Kontakt bringbarer metallischer Leitkörper 11 eingesetzt, der eine Bohrung 12 besitzt, in die wiederum der Temperaturfühler 10 wärmeleitend eingesteckt ist. Der Leitkörper 11 ist pilzförmig mit Hut 13 und Stiel 14 ausgebildet, wobei der Hut 13 aus der ebenen Oberfläche 15 der Klemmbacke 8 herausragt, um auf jeden Fall Kontakt mit der Rohrleitung 2 zu haben. Die besagte Bohrung befindet sich von der Seite her im Stiel 14 (Figur 2). Der Temperaturfühler 10 ist über eine Meßleitung 21 mit einem Anzeigegerät 22 verbunden.

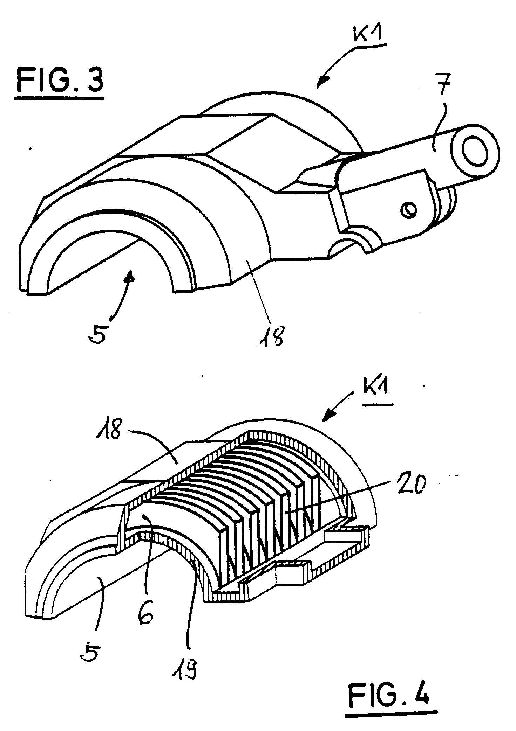

Gemäß den Figuren 2 und 3 wird der Hohlraum 6 zwischen einer Außenschale 18 und einer Innenschale 19 gebildet. Die Innenschale 19 ist mit in den Hohlraum 6 ragenden Kühlvorsprüngen 20 versehen, die als radiale halbkreisringförmige Kühlrippen ausgebildet sind.

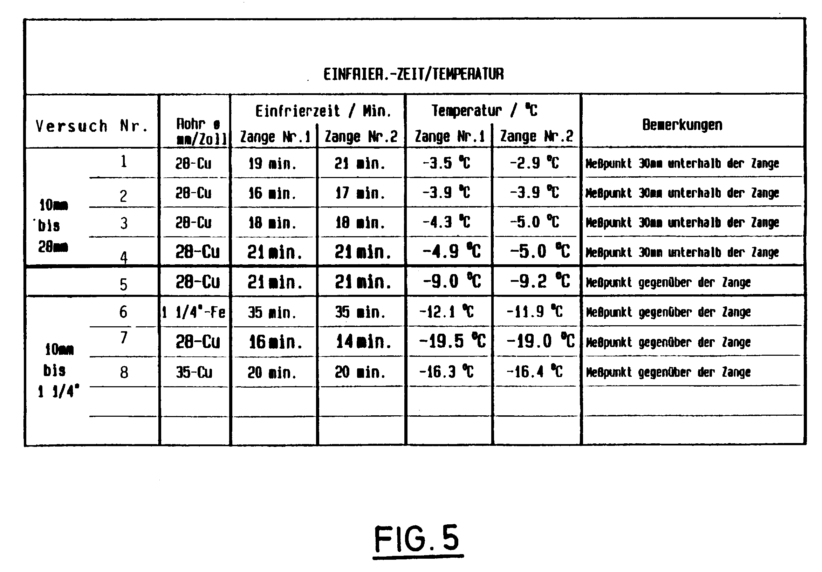

In Figur 5 zeigen die Versuche Nr. 1 bis 4 die Einfrierzeiten mit herkömmlichen Kühlklammern (als "Zange" bezeichnet) und Meßanordnungen, wobei jedesmal zwei Kühlklammern willkürlich ausgewählt wurden.

Die Grenze der Zuverlässigkeit der Beurteilung liegt bei Kupferrohren (Cu) mit Durchmessern von 28 mm.

Versuch Nr. 5 hatte eine Kühlklammer mit einem Meßfühler in der Anordnung nach den Figuren 1 und 2 zum Gegenstand, jedoch ohne Kühlrippen auf der Innenschale 19 , und es zeigte sich, daß in der gleichen Zeit deutlich niedrigere Temperaturen gemessen wurden, die für den Einfriervorgang repräsentativer sind als bei den früheren "Fernmessungen".

Bei den Versuchen 6 bis 8 wurden Kühlklammern nach den Figuren 1 bis 4 verwendet, und es zeigte sich, daß bei Kupferrohren mit 28 mm Durchmesser (Versuch Nr. 7) nicht nur kürzere Einfrierzeiten, sondern auch deutlich niedrigere Temperaturen erreicht wurden womit natürlich die Sicherheit steigt, wenn von vorgegebenen Einfrierzeiten ausgegangen wird.

Es zeigte sich aber auch, daß noch Kupferrohre mit 35 mm Durchmesser in etwa gleicher Zeit wie 28 mm-Rohre (20 zu 21 Minuten) zuverlässig eingefroren werden konnten (Versuch Nr. 8).

Selbst schwierig einzufrierende Eisenrohre (Fe, Versuch Nr. 6) mit einem Nenndurchmesser von 1 1/4 Zoll ließen sich in angemessener Zeit zuverlässig einfrieren.

Hierbei ist zu erwähnen, daß die Versuche Nr. 1 bis 7 mit Reduziereinsätzen gefahren wurden. Die Ausnehmung 5 entsprach einem Rohrdurchmesser von 35 mm.

## Patentansprüche

1. Kühlklammer (1) zum Einfrieren von mediendurchströmten Rohrleitungen (2), insbesondere zum örtlichen Absperren von Wasserleitungen von Heizungssystemen durch Bilden von Eispfropfen (3), mit zwei Klammerteilen (K1 und K2) für das Verspannen der Kühlklammer gegen die Rohrleitung, von denen mindestens ein Klammerteil als Kühlbacke (4) ausgebildet ist, die eine Ausnehmung (5) für das Aufsetzen der Kühlklammer auf die einzufrierende Rohrleitung, einen Hohlraum (6) für die Durchleitung eines Kältemittels sowie einen Anschluß (7) für die Verbindung des Hohlraums mit einer Kühlmittelquelle aufweist, wobei in einem der Klammerteile (K1 oder K2) ein Temperaturfühler (10) angeordnet ist, dadurch gekennzeichnet, daß der Temperaturfühler (10) gegenüber der Kühlbacke (4) thermisch isoliert angeordnet und in Wärmekontakt mit der Rohrleitung (2) bringbar ist.

2. Kühlklammer nach Anspruch 1, dadurch gekennzeichnet, daß eines der Klammerteile (K2) mindestens teilweise aus einem schlecht wärmeleitenden Werkstoff ausgebildet ist und daß der Temperaturfühler (10) in den schlecht wärmeleitenden Werkstoff eingesetzt ist.

3. Kühlklammer nach Anspruch 2, dadurch gekennzeichnet, daß das betreffende Klammerteil (K2) mindestens im Bereich des Temperaturfühlers (10) aus einem schlecht wärmeleitenden Kunststoff besteht.

4. Kühlklammer Anspruch 2, dadurch gekennzeichnet, daß das betreffende Klammerteil (K2) mit dem Temperaturfühler (10) aus einem Kunststoff besteht.

5. Kühlklammer nach Anspruch 2, dadurch gekennzeichnet, daß der Temperaturfühler wärmeleitend in einen Leitkörper (11) eingesetzt ist, der seinerseits thermisch isoliert in dem betreffenden Klammerteil (K2) angeordnet ist, aus diesem herausragt und in unmittelbaren Kontakt mit der Rohrleitung bringbar angeordnet ist.

6. Kühlklammer nach Anspruch 5, dadurch gekennzeichnet, daß der Leitkörper (11) pilzförmig mit Hut (13) und Stiel (14) ausgebildet ist, daß der Hut (13) aus der Oberfläche (15) des betreffenden Klammerteils (K2) herausragt, und daß sich im Stiel (14) eine Bohrung (12) befindet, in die der Temperaturfühler (10) eingesetzt ist.

7. Kühlklammer nach Anspruch 1, dadurch gekennzeichnet, daß der Hohlraum (6) zwischen einer Außenschale (18) und einer Innenschale (19) gebildet ist und daß die Innenschale mit in den Hohlraum ragenden Kühlvorsprüngen (20) versehen ist.

8. Kühlklammer nach Anspruch 7, dadurch gekennzeichnet, daß die Kühlvorsprünge (20) als radiale Kühlrippen ausgebildet sind.

## Claims

1. Cooling clamp (1) for freezing media-conveying pipelines (2), in particular for locally shutting off water pipes of heating systems by forming ice plugs (3), comprising to clamp sections (K1 and K2) for clamping the cooling clamp to the pipeline, of which at least one clamp section is designed as a cooling jaw (4) comprising a cutout (5) for fitting the cooling clamp onto the pipeline to be frozen, a cavity (6) for ducting a refrigerant as well as a socket (7) for connecting the cavity to a refrigerant source, and that a temperature sensor (10) is fitted in one of the clamping sections (K1 or K2), **characterized in that** the temperature sensor (10) is arranged so that it is thermally sealed from the cooling jaw (4) and can be put in heat contact with the pipeline (2).

2. Cooling clamp according to claim 1, **characterized in that** one of the clamping sections (K2) is at least partially made of a material of poor heat conductivity, and that the temperature sensor (10) is inserted into the material of poor heat conductivity.

3. Cooling clamp according to claim 2, **characterized in that** the respective clamping section (K2) is, at least in the area of the temperature sensor (10), made of a plastic material of poor heat conductivity.

4. Cooling clamp according to claim 2, **characterized in that** the respective clamping section (K2) with the temperature sensor (10) is made of a plastic material.

5. Cooling clamp according to claim 2, **characterized in that** the temperature sensor is in a heat-conducting manner inserted into a conducting element(11), which is itself thermally insulated in the respective clamping section (K2) and protrudes therefrom and can be put into direct contact with the pipeline.

6. Cooling clamp according to claim 5, **characterized in that** the conducting element (11) is designed mushroom-shaped with hat (13) and stem (14), that the hat (13) protrudes from the surface (15) of the respective clamping section (K2), and that the stem (14) houses a bore (12) into which the temperature sensor (10) is inserted.

7. Cooling clamp according to claim 1, **characterized in that** the cavity (6) is established between an exterior shell (18) and an interior shell (19), and that the interior shell is provided with cooling protrusions (20) which protrude into the cavity.

8. Cooling clamp according to claim 7, **characterized in that** the cooling protrusions (20) are designed as radial cooling fins.

## Revendications

1. Pince réfrigérante (1) pour congeler des conduites tubulaires (2) traversées par un fluide, en particulier pour l'obturation locale de conduites d'eau de systèmes de chauffage en formant des bouchons de glace (3), comportant deux parties de pince (K1 et K2) pour le serrage de la pince réfrigérante contre la conduite tubulaire, dont au moins une partie de pince est réalisée sous forme de mâchoire de refroidissement (4) qui présente un évidement (5) pour la mise en place de la pince réfrigérante sur la conduite tubulaire à congeler, une cavité (6) pour le passage d'un agent réfrigérant ainsi qu'un raccord (7) pour la liaison de la cavité avec une source d'agent réfrigérant, et un détecteur de température (10) est agencé dans l'une des parties de pince (K1 ou K2), caractérisée en ce que le détecteur de température (10) est agencé de façon thermiquement isolée par rapport à la mâchoire de refroidissement (4) et peut être amené en contact thermique avec la conduite tubulaire (2).

2. Pince réfrigérante selon la revendication 1, caractérisée en ce que l'une des parties de pince (K2) est réalisée au moins partiellement en un matériau mauvais conducteur de chaleur, et en ce que le détecteur de température (10) est mis en place dans le matériau mauvais conducteur de chaleur.

3. Pince réfrigérante selon la revendication 2, caractérisée en ce que la partie de pince concernée (K2) est constituée au moins dans la région du détecteur de température (10) en une matière plastique mauvaise conductrice de chaleur.

4. Pince réfrigérante selon la revendication 2, caractérisée en ce que la partie de pince concernée (K2) comportant le détecteur de température (10) est constituée en une matière plastique.

5. Pince réfrigérante selon la revendication 2, caractérisée en ce que le détecteur de température est mis en place de façon thermoconductrice dans un corps conducteur (11) qui est à son tour agencé de façon thermiquement isolée dans la partie de pince concernée (K2), en ce qu'il dépasse hors de celle-ci, et en ce qu'il est agencé de façon à pouvoir être amenée en contact direct avec la conduite tubulaire.

6. Pince réfrigérante selon la revendication 5, caractérisée en ce que le corps conducteur (11) est réalisé sous forme d'un champignon avec un chapeau (13) et une tige (14), en ce que le chapeau (13) dépasse hors de la surface (15) de la partie de pince concernée (K2), et en ce dans la tige (14) est ménagé un perçage (12), dans lequel est mis en place le détecteur de température (10).

7. Pince réfrigérante selon la revendication 1, caractérisée en ce que la cavité (6) est réalisée entre une coque extérieure (18) et une coque intérieure (19), et en ce que la coque intérieure est pourvue de saillies de refroidissement (20) pénétrant dans la cavité.

8. Pince réfrigérante selon la revendication 7, caractérisée en ce que les saillies de refroidissement (20) sont réalisées sous forme de nervures de refroidissement radiales.
